# EUROPEAN PATENT APPLICATION

(11) **EP 3 868 496 A1**
(43) Date of publication of application: **25.08.2021**
(21) Application number: 19874229.8
(22) Date of filing: 26.09.2019
(51) Int. Cl.: B22F 3/16, B22F 3/105, B23K 26/342, B33Y 10/00, C22C 1/05

(54) **CURED LAYER LAMINATION METHOD AND PRODUCTION METHOD FOR LAMINATED MOLDED ARTICLE**

(30) Priority: 17.10.2018 JP 2018196019
(71) Applicant: KABUSHIKI KAISHA KOBE SEIKO SHO (KOBE STEEL, LTD.), Hyogo 651-8585 (JP)
(72) Inventor: KUROSAWA Eisuke, Hyogo 651-2271 (JP)
(74) Representative: Müller-Boré & Partner Patentanwälte PartG mbB
(86) International application number: PCT/JP2019/038050
(87) International publication number: WO 2020/080062

(57) **Abstract**

A powder material for cured layer formation, and having a plurality of powder types mixed therein, is supplied on to a substrate and melted; and cured layers of melted and solidified powder material are sequentially layered upon the substrate. The powder material includes: a first powder including an alloy that forms the matrix of the cured layer; and a second powder including a ceramic. The powder material is heated until at least part of the second powder is melted; and at least some metal elements included in the melted second powder are caused to form a solid solution on the matrix of the cured layer.

## Description

### TECHNICAL FIELD

The present invention relates to a method for depositing a hardened layer and a method for producing an additively-manufactured object.

### BACKGROUND ART

For a metal component required to have high mechanical properties, various manufacturing methods are employed for improving component performances. For example, a method of overlaying a surface of a component with a material having excellent wear resistance and erosion resistance by welding or thermal spraying, a method of forming the entire component with a material satisfying the required properties by additive manufacturing or powder sintering performed by mold formation, hot isostatic pressing (HIP), or the like, is used. In addition, a method, in which a powder sintering compact having excellent mechanical properties is formed and the powder sintering compact is joined to a surface of a substrate by diffusion joining, brazing, or the like, is also used.

In particular, examples of the material having excellent wear resistance and erosion resistance include materials including metal, ceramics, or cermet. In the case of performing surface overlaying, molding, or additive manufacturing with the use of these materials, various techniques have been proposed for ensuring a strength of joining with a substrate, avoiding cracks during processing, and achieving high-density molded articles or additively-manufactured products.

For example, Patent Literature 1 describes a method of manufacturing a component having excellent wear resistance by preparing a powder mixture obtained by mixing a tungsten carbide powder with a cobalt-based alloy powder in a predetermined ratio, filling a mold with the powder mixture, and metallurgically bonding the powder mixture to each other by a hot isostatic pressing method (HIP treatment).

In Patent Literature 2, as a deposition material used for powder additive manufacturing, deposition particles having a special structure prepared from powders containing ceramics and powders containing metals are used. Specifically, Patent Literature 2 describes a method of manufacturing a built-up object by selective laser melting (SLM) with deposition particles that are formed of tungsten carbide as a ceramic powder, a chromium carbide powder, cobalt as a metal powder, a Stellite (registered trademark) alloy that is a Co-Cr alloy, a nickel chrome alloy, and a stainless steel powder. Patent Literature 2 also discloses that when a plurality of kinds of single particles such as metal particles and ceramic particles are mixed and the mixture is used as a deposition material, deviation of components occurs in the deposition material due to a difference in specific gravity of each material or the like, and non-uniformity of a microstructure also appears in a built-up object, and therefore, such a case is not suitable.

Non-Patent Literature 1 describes a technique of coating a surface of a substrate with a composite material of a cobalt alloy and tungsten carbide by a laser powder spray melting method (Laser Metal Deposition: LMD) for improving wear resistance of the surface of the substrate.

### CITATION LIST

### PATENT LITERATURE

Patent Literature 1: JP-A-2015-533939
Patent Literature 2: JP-A-2017-114716

### NON-PATENT LITERATURE

Non-Patent Literature 1: Wear resistance in the soil of Stellite-6/WC coatings produced using laser cladding method (Int. Journal of Refractory Metals and Hard Materials, Vol. 64, 2017, pp. 20-26)

### SUMMARY OF INVENTION

### TECHNICAL PROBLEM

However, in the manufacturing method described in Patent Literature 1, a degree of freedom in shape and a size of components that can be manufactured are limited due to the necessity of a mold and the restriction of a chamber for performing HIP treatment. In addition, many steps including a step of manufacturing a mold are required for manufacturing a component, and thus the manufacturing cost is increased.

In the method described in Patent Literature 2, since a special deposition material prepared from a ceramic and the metal powder is used, a complicated process may be required for the preparation of the deposition material, and the material cost may be increased. This method is suitable for building up the entire component using the same kind of deposition material. However, it is uncertain whether a layer having a uniform and high hardness can be partially applied without causing cracks in a case where a part of a component is additively built up using dissimilar materials.

In the method described in Non-Patent Literature 1, in order to increase the hardness of the entire overlay layer, it is necessary to increase an amount of tungsten carbide powder contained by the overlay layer. When the increase in the amount of tungsten carbide powder is attempted to be achieved by laser metal deposition (LMD), cracks are likely to occur during overlay processing.

In the method described in Non-Patent Literature 1, processing is required to be performed under the conditions in which many parameters such as a laser output, a laser radiation range, a head scanning speed, a powder supply amount, and a gas flow rate are optimized, for avoiding occurrence of cracks of an overlay layer and non-uniformity of a hardness distribution. Therefore, it takes a lot of labor and time to optimize each parameter, and it is difficult to stably form a high-hardness layer having a thickness of several millimeters without causing cracks.

An object of the present invention is to provide a method for depositing a hardened layer that can stably form a high-hardness hardened layer having a thickness of several millimeters without causing a crack, and a method for producing an additively-manufactured object.

### SOLUTION TO PROBLEM

The present invention has the following configurations.
(1) A method for depositing a hardened layer, comprising sequentially depositing a hardened layer formed by supplying a powder material for forming a hardened layer, which is obtained by mixing a plurality of kinds of powders, to a substrate, and melting and solidifying the powder material on/above the substrate,
   wherein the powder material contains a first powder containing an alloy to be serving as a matrix portion of the hardened layer and a second powder containing a ceramic,
   wherein the method comprises heating the powder material until at least a part of the second powder is melted, to allow at least a part of metal elements contained in the melted second powder to be dissolved in the matrix portion of the hardened layer.
(2) A method for producing an additively-manufactured object, comprising:
   overlaying a target overlay member with the hardened layer by the method for depositing a hardened layer according to (1),
   wherein the substrate is the target overlay member.

### ADVANTAGEOUS EFFECTS OF INVENTION

In the present invention, a high-hardness hardened layer having a thickness of several millimeters can be stably formed without causing a crack.

### BRIEF DESCRIPTION OF DRAWINGS

[FIG. 1] FIG. 1 is a schematic configuration diagram of a laser metal deposition device that performs laser metal deposition welding.
[FIG. 2A] FIG. 2A is a schematic cross-sectional view of additively-manufactured objects produced in Test Examples 1, 3, and 5.
[FIG. 2B] FIG. 2B is a schematic cross-sectional view of additively-manufactured objects produced in Test Examples 2, 4, and 6.
[FIG. 3] FIG. 3 is a photograph showing a cross section of the additively-manufactured object in Test Example 1.
[FIG. 4] FIG. 4 is a photograph showing a cross section of the additively-manufactured object in Test Example 2.
[FIG. 5] FIG. 5 is a graph showing a measurement result of a Vickers hardness distribution in the additively-manufactured objects in Test Examples 1 and 2.
[FIG. 6A] FIG. 6A is an area ratio measurement image in Test Example 2.
[FIG. 6B] FIG. 6B is a binary image of the area ratio measurement image shown in FIG. 6A.
[FIG. 7] FIG. 7 is a photograph showing a cross section of the additively-manufactured object in Test Example 3.

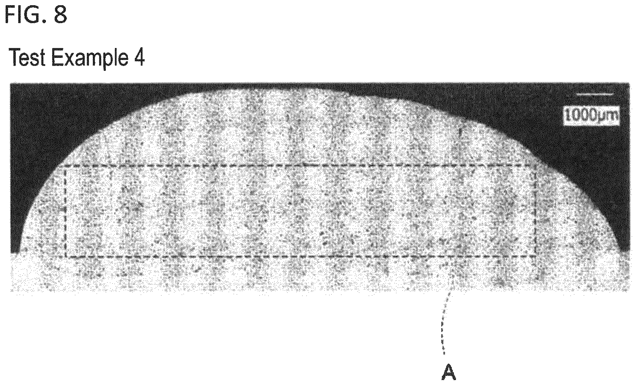

[FIG. 8] FIG. 8 is a photograph showing a cross section of the additively-manufactured object in Test Example 4.
[FIG. 9] FIG. 9 is a graph showing a measurement result of a Vickers hardness distribution in the additively-manufactured objects in Test Examples 3 and 4.
[FIG. 10A] FIG. 10A is an area ratio measurement image in Test Example 4.
[FIG. 10B] FIG. 10B is a binary image of the area ratio measurement image shown in FIG. 10A.
[FIG. 11] FIG. 11 is a photograph showing a cross section of the additively-manufactured object in Test Example 5.
[FIG. 12] FIG. 12 is a photograph showing a cross section of the additively-manufactured object in Test Example 6.
[FIG. 13] FIG. 13 is a graph showing a measurement result of a Vickers hardness distribution in the additively-manufactured objects in Test Examples 5 and 6.

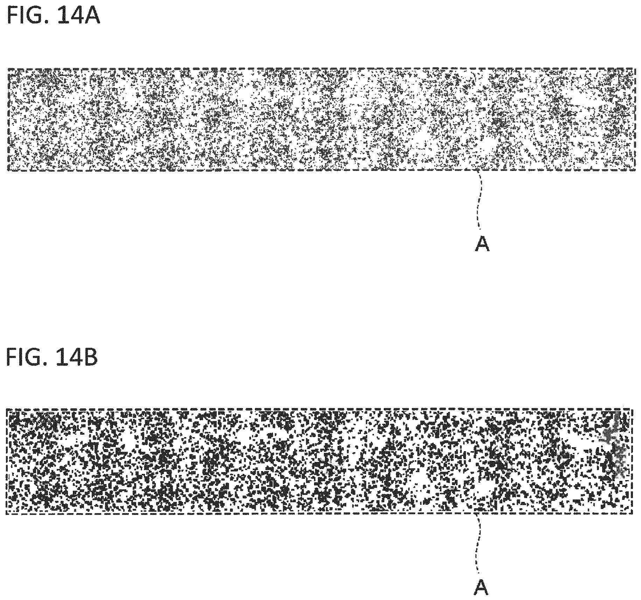

[FIG. 14A] FIG. 14A is an area ratio measurement image in Test Example 6.
[FIG. 14B] FIG. 14B is a binary image of the area ratio measurement image shown in FIG. 14A.
[FIG. 15] FIG. 15 is a graph showing a content of a second powder and an area ratio of remaining particles in each of Test Examples 2, 4, and 6.

### DESCRIPTION OF EMBODIMENTS

Hereinafter, embodiments of the present invention are described in detail with reference to the drawings.

In a method of depositing a hardened layer in the present invention, a powder material for forming a hardened layer, which is obtained by mixing a plurality of kinds of powders, is supplied to a substrate and is melted, and a hardened layer obtained by melting and solidifying the powder material is sequentially deposited on/above the substrate. In the method of depositing the hardened layer, as is described in detail below, the powder material includes a first powder containing an alloy to be serving as a matrix portion of a hardened layer and a second powder containing a ceramic, and the powder material is heated until at least a part of the second powder is melted, to allow at least a part of metal elements contained in the melted second powder to be dissolved in the matrix portion of the hardened layer. Accordingly, a high-hardness hardened layer having a thickness of several millimeters can be stably formed without causing a crack.

In the following description, an example of using laser metal deposition (LMD) welding to melt a powder material for forming an overlay layer is described, but the present invention is not limited to this example. For example, the present method for depositing a hardened layer can also be suitably applied to laser additive manufacturing (LAM), direct metal laser sintering (DMLS), plasma transferred arc welding (PTA), or the like. In particular, since a workpiece is welded using a welding robot in the case of laser metal deposition welding, a degree of freedom in a shape in the additive manufacturing can be improved as compared with a case where a workpiece is processed in a chamber.

### [Laser metal deposition device]

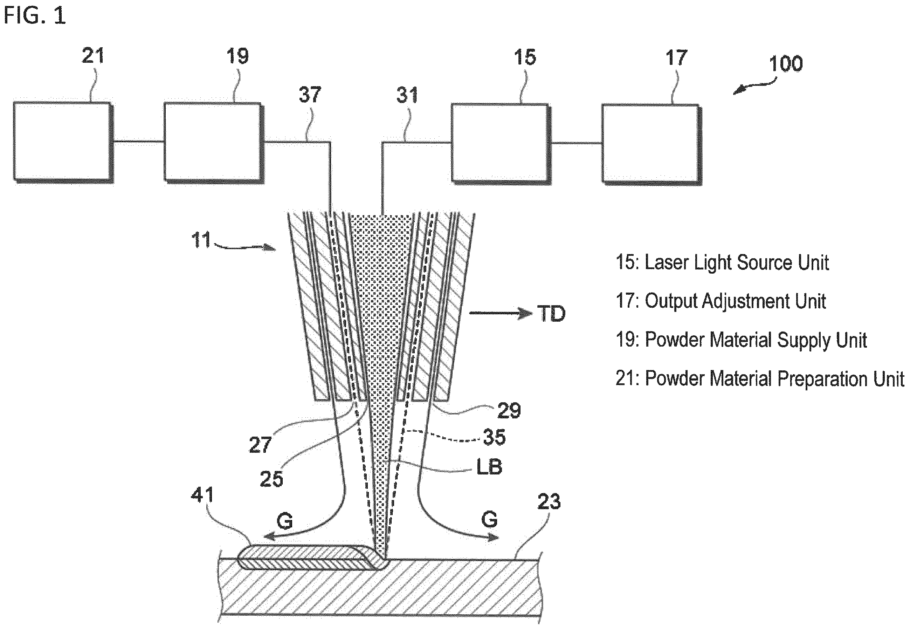

FIG. 1 is a schematic configuration diagram of a laser metal deposition device 100 that performs laser metal deposition welding.

The laser metal deposition device (hereinafter referred to as "LMD device") 100 shown in FIG. 1 includes a welding torch 11 that is attached to a multi-axis welding robot (not shown), a laser light source unit 15 that supplies laser light to the welding torch 11, an output adjustment unit 17 that adjusts a laser output of the laser light source unit 15, a powder material supply unit 19 that supplies a powder material 35 for forming an overlay layer described below to the welding torch 11, and a powder material preparation unit 21.

The welding torch 11 is supported by a robot arm (not shown) that can move relative to a substrate 23 as a target to be processed. The welding torch 11 is relatively moved along a desired welding line on the substrate 23 by driving of the robot arm. FIG. 1 shows a state in which welding is performed while moving the welding torch 11 along a welding direction TD.

A distal end of the welding torch 11 includes a laser radiation port 25, a powder material supply port 27, and a shielding gas supply port 29.

The laser radiation port 25 is opened at a center of the distal end of the welding torch 11, and a laser beam LB is radiated from the laser radiation port 25 toward the substrate 23. The laser beam LB is oscillated by the laser light source unit 15 and guided to the welding torch 11 via a light guide system 31. The output adjustment unit 17 can optionally increase or decrease a heat input for a weld portion by adjusting the laser output of the laser light source unit 15.

The powder material supply port 27 is concentrically opened radially outward from the laser radiation port 25, and a powder material 35 supplied from the powder material supply unit 19 is ejected from the powder material supply port 27 toward the substrate 23 through a supply path 37. The powder material 35 is prepared by the powder material preparation unit 21, and a supply amount of the powder material 35 to the substrate 23 is adjusted by the powder material supply unit 19.

The powder material preparation unit 21 adjusts a blending amount of the second powder in the powder material 35 to be supplied to the welding torch 11 by the powder material supply unit 19.

The powder material supply unit 19 ejects the powder material 35 from the powder material supply port 27 together with carrier gas from a carrier gas supply unit (not shown). The powder material 35 ejected toward the substrate 23 is melted by the condensed laser beam LB on a surface of the substrate 23 and then cooled and solidified to form a hardened layer 41.

The shielding gas supply port 29 is concentrically opened outside the powder material supply port 27, and shielding gas G is supplied from the shielding gas supply port 29 toward the substrate 23. The shielding gas G prevents oxidation of the hardened layer 41 and surroundings thereof.

### [Powder material]

The powder material preparation unit 21 mechanically mixes a first powder containing a Co-Cr alloy or Co-Cr-W-C alloy steel (Stellite alloy) that is a Co-based alloy with a second powder containing tungsten carbide, and prepares the powder material 35 for forming an overlay layer. The term "mechanically mixing" as used herein means mixing the powder materials with each other without any special processing, by supplying different kinds of powders to a carrier gas stream.

As the first powder, for example, Stellite #1, #6, #12, #21, Colmonoy (registered trademark) #5, #21, or the like may be used. As the second powder, for example, a tungsten carbide powder may be used, and chromium carbide, titanium carbide, or the like may also be used. As the first powder and the second powder, commercially available powder materials may be used as they are.

### [Substrate]

The substrate 23 is flat plate-shaped steel and the shape is not limited to a flat plate shape. A plate with a curved surface, or one having an appropriate shape, such as a block body or a tubular body, is adopted depending on a shape of an additively-manufactured object to be produced. As a material of the substrate 23, besides steel such as stainless steel, a cobalt-based alloy or a nickel-based alloy may be used.

### [Formation of overlay layer (additively-manufactured body)]

The LMD device 100 shown in FIG. 1 performs laser metal deposition welding while moving the welding torch 11 by the robot arm, and forms a hardened layer 41 by melting and solidifying the powder material 35 on/above the substrate 23. A plurality of hardened layers 41 are formed in an overlapping manner, thereby forming an additively-manufactured body having a larger thickness.

During the laser metal deposition welding, a laser output is increased until at least a part of the ceramic powder contained in the second powder is melted, and at least a part of the second powder having a melting point higher than that of the first powder is melted. In a case where the second powder is tungsten carbide, at least a part of metal elements (tungsten) contained in the melted tungsten carbide is allowed to be dissolved in the alloy of the first powder to be serving as the matrix portion of the hardened layer 41. As a result, the hardened layer 41 having improved mechanical properties (hardness) at a part including the matrix portion and having a uniform hardness distribution is formed.

### [Function and effect]

In laser metal deposition welding using a high-hardness material, cracks tend to occur at an interface between the substrate 23 and the hardened layer 41 or in the hardened layer 41 by the influence of residual stress generated during solidification due to a difference in coefficients of linear expansion between materials. In addition, cracks are likely to occur due to the formation of an embrittlement layer depending on a combination of materials. However, as in the present method, a laser output is increased until a temperature reaches a temperature range within which at least a part of the ceramic powder as the second powder is melted, and then, the solid solution of the ceramic powder is promoted at an interface between the substrate 23 and the hardened layer 41, the material on the substrate 23 side and the material on the hardened layer 41 side being different from each other, and a joining strength at the interface is improved as compared with common methods such as thermal spraying, diffusion joining, or brazing.

Heating is performed with the laser light to reach a temperature range within which at least a part of the ceramic powder is melted, and as a result, the heat input in and around a molten portion increases, and a solidification rate of the melted powder material 35 slows down. Therefore, the generation of residual stress is alleviated, and the occurrence of cracks during processing can be prevented.

Generally, in a case where the laser output is increased and the heat input to the molten portion is increased, a cooling rate of the melted powder material 35 slows down. Therefore, the obtained hardened layer 41 has a coarse solidified microstructure, and the hardness of the hardened layer 41 tends to decrease. In contrast, in the present method for depositing a hardened layer, a high-hardness metal element contained in the tungsten carbide powder as the second powder is allowed to be dissolved in the matrix portion, so that an amount of the reduction in hardness of the hardened layer can be compensated for. As compared with the case of single phase overlaying using only the first powder (matrix alloy powder), higher hardness can be obtained.

Generally, when the matrix alloy and the ceramic are sintered, or only a matrix alloy powder is melted and a hardened layer is formed, the matrix alloy contains the ceramic in its original particle state and solidifies. In that case, a difference in hardness between the matrix alloy itself and the ceramic itself is large, and thus, the microstructure and hardness properties in the hardened layer tend to be non-uniform depending on a distribution state of ceramic particles. In contrast, in the present method for depositing a hardened layer, the metal elements contained in the ceramic powder are allowed to be dissolved in the matrix portion, and as a result, a hardened layer including the matrix portion having uniformly increased hardness can be formed.

In a case of using tungsten carbide for the second powder, the specific gravity of the second powder is larger than that of the first powder, and therefore, the second powder in the original particle state is likely to settle in the molten portion of the hardened layer. As a result, the dispersion of tungsten carbide tends to be biased. In contrast, in the present method for depositing a hardened layer, a part of the second powder is also melted, and as a result, a particle size of tungsten carbide that remains in a particle state is reduced, and the uniformity of the dispersion thereof is also improved.

In the present method for depositing a hardened layer, by performing laser metal deposition welding with the powder material 35, which is obtained by mixing the first powder in the form of powder with the second powder in the form of powder, no complicated steps for material preparation are required, and material cost can be reduced.

In the present method for depositing a hardened layer, a ratio b/a is 0.2 or less, in which a [vol%] represents a volume fraction of the second powder blended in the powder material 35 to the powder material 35, and b [area%] represents an area ratio of remaining particles of the second powder in a cross section of the hardened layer 41 per unit area. Accordingly, as is described below in detail with reference to examples, the hardness distribution in the hardened layer 41 can be made uniform, and the wear resistance of the hardened layer 41 can be improved.

The volume fraction a of the second powder to be blended is changed by adjusting a supply amount ratio between the first powder to be supplied to the carrier gas flow and the second powder to be supplied to the carrier gas flow. The area ratio b of the remaining particles of the second powder is changed as a result of adjusting a laser output to reach a temperature at which a part of the ceramic powder as the second powder is melted.

Here, the adjustment of the laser output is not limited to the method of increasing or decreasing the laser output of the laser light source unit 15 shown in FIG. 1. For example, an optical element such as an ND filter or an attenuator may be disposed in the optical path of the laser beam LB output at a constant light amount to adjust the light amount. In this case, the laser beam LB can be stabilized regardless of the output.

In the present method for depositing a hardened layer, variation in the Vickers hardness is 200 Hv or less in a range of a depth of up to 3 mm from a surface of the outermost layer of the hardened layer 41 toward the inside of the hardened layer 41.

### Example 1

By using the LMD device 100 shown in FIG. 1, a hardened layer (overlay layer) was formed on a substrate under each condition of Test Examples 1 to 6 shown in Table 1. In Test Examples 1 to 6, a stainless steel having a dimension of 50 mm × 50 mm × 20 mm (thickness) was used as a substrate.

**Table 1**

| | Kinds of powder | | Blending of powder [wt.%] | | Laser output [kW] |
|---|---|---|---|---|---|
| | First powder | Second powder | First powder | Second powder | |
| Test Example 1 | Stellite #1 | - | 100 | - | 3.5 |
| Test Example 2 | Stellite #1 | WC | 88.8 | 11.2 | 3.5 |
| Test Example 3 | Colmonoy #5 | - | 100 | - | 3.5 |
| Test Example 4 | Colmonoy #5 | WC | 88.6 | 11.5 | 3.5 |
| Test Example 5 | Colmonoy #21 | - | 100 | - | 2.5 |
| Test Example 6 | Colmonoy #21 | WC | 70.4 | 29.6 | 2.5 |

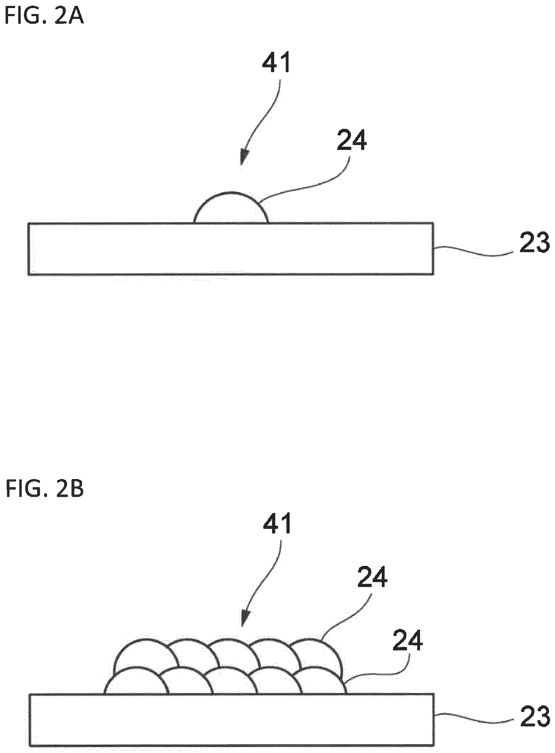

In Test Examples 1, 3, and 5, only the first powder was used as the powder material for forming a hardened layer, and a hardened layer 41 formed of one bead 24 was formed on the substrate 23 as shown in FIG. 2A. The laser output was set to 3.5 kW in Test Examples 1 and 3 and the laser output was set to 2.5 kW in Test Example 5. As a result, a hardened layer could be formed without cracks. It was confirmed by a penetrant testing (PT) that no cracks were generated after processing.

In Test Examples 2, 4, and 6, a mixture of the first powder and the second powder was used as the powder material for forming a hardened layer, and a hardened layer 41 with a two-layer structure including five beads 24 in each layer was formed on the substrate 23 as shown in FIG. 2B. The same laser output conditions were set for Test Example 1 and Test Example 2, Test Example 3 and Test Example 4, and Test Example 5 and Test Example 6.

Table 2 collectively shows details of a supply amount of each powder, a content (mass fraction, volume fraction a) of the second powder, the details of which are described below, an area ratio b, and a ratio b/a in Test Examples 2, 3, and 6 in which the first powder was mixed with the second powder.

**Table 2**

| | First powder | | | | Second powder | | | | Content of second powder | | Area ratio b of remaining particles of second powder [area%] | Ratio b/a |
|---|---|---|---|---|---|---|---|---|---|---|---|---|
| | Material | Density [g/cm³] | Supply rate [g/min] | Supply rate [cc/min] | Material | Density [g/cm³] | Supply rate [g/min] | Supply rate [cc/min] | Mass fraction [wt.%] | Volume fraction a [vol%] | | |
| Test Example 2 | Stellite #1 | 4.94 | 11.9 | 2.41 | WC | 7.00 | 1.5 | 0.21 | 11.2 | 8.17 | 0.971 | 0.119 |
| Test Example 4 | Colmonoy #5 | 4.52 | 11.6 | 2.57 | WC | 7.00 | 1.5 | 0.21 | 11.5 | 7.71 | 1.14 | 0.148 |
| Test Example 6 | Colmonoy #21 | 4.75 | 12.6 | 2.65 | WC | 7.00 | 5.3 | 0.76 | 29.6 | 22.2 | 25.1 | 1.13 |

Vickers hardness measurement was performed on cross sections obtained by cutting the hardened layers formed in Test Examples 1 to 6. In the hardness measurement, a micro Vickers hardness tester was used, and a test load was set to 300 gf.

### (Test Examples 1 and 2)

In Test Example 1, a hardened layer was formed using only Stellite #1 (first powder). In Test Example 2, a hardened layer was formed using a mixture of Stellite #1 (first powder) and tungsten carbide (second powder). The laser output was set to 3.5 kW in both Test Examples 1 and 2. In Test Example 2, a part of tungsten carbide as the second powder was allowed to be dissolved in a matrix of the hardened layer formed of Stellite #1.

As shown in Table 2, the blending amount of the second powder in the mixed powder in Test Example 2 was converted from the density and supply rate of the first powder and the density and supply rate of the second powder, and was 11.2 [wt.%] in terms of mass fraction and was 8.17 [vol%] in terms of volume fraction a.

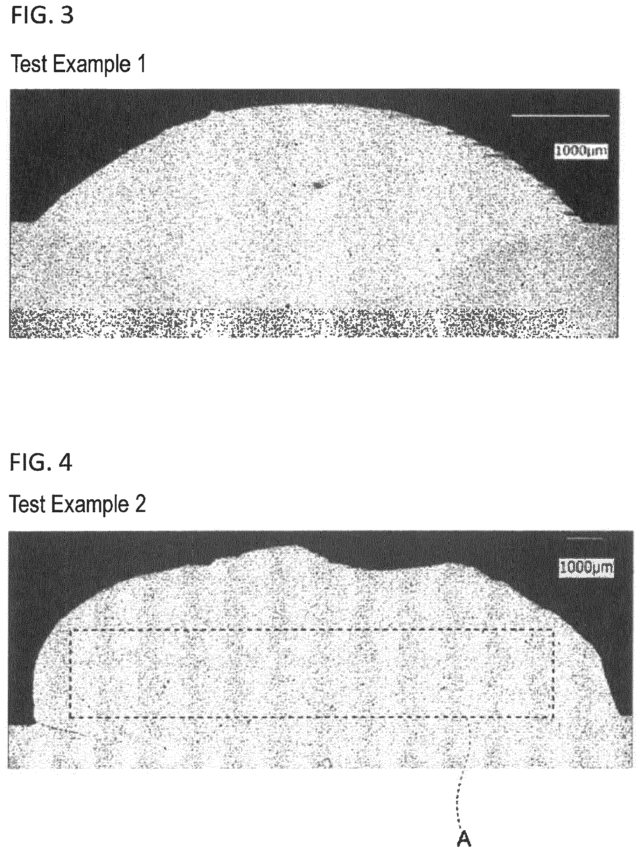

A cross section of the hardened layer in Test Example 1 is shown in FIG. 3, and a cross section of the hardened layer in Test Example 2 is shown in FIG. 4.

The Vickers hardness in each Test Example was measured at a pitch of 0.4 mm from the surface of the hardened layer toward the inside thereof.

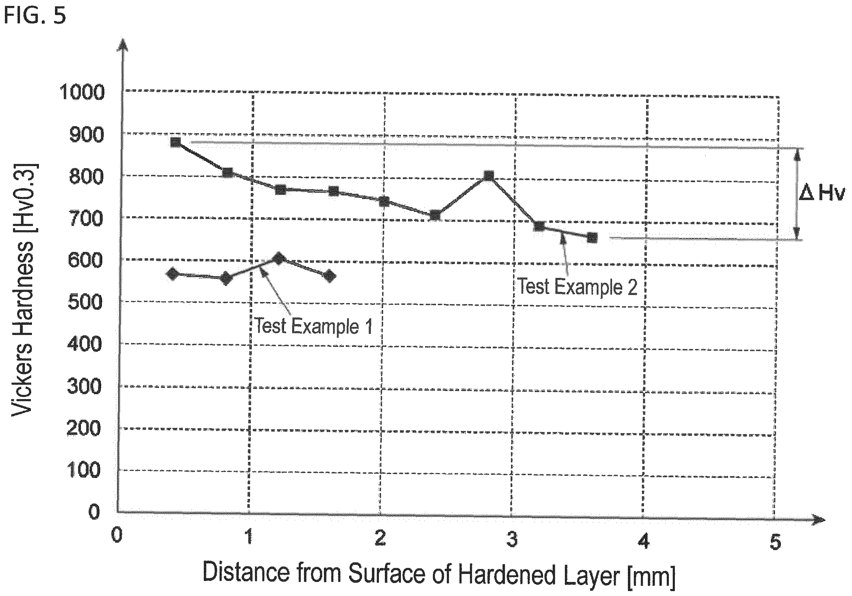

The measurement results of Vickers hardness in Test Examples 1 and 2 are shown in FIG. 5.

In Test Example 1, the hardness in a range of a depth of 1.6 mm or less from a surface of the hardened layer was approximately 550 Hv to 600 Hv.

The Vickers hardness in a range of a depth of about up to 3 mm from a surface of the hardened layer in Test Example 2 was 700 Hv or more, and the hardness of the hardened layer in Test Example 2 in which tungsten carbide was blended was higher than that in Test Example 1 in which tungsten carbide was not contained. The variation ΔHv in hardness in a thickness direction of the hardened layer in Test Example 2 was 200 Hv or less.

In the cross section of the hardened layer in Test Example 2, an area ratio b of the remaining particles of the second powder per unit area was measured by determining an inspection area A having a certain area, which is shown by being surrounded by a rectangle in the cross section of the hardened layer shown in FIG. 4, and measuring a total area of the remaining particles present in the inspection area A.

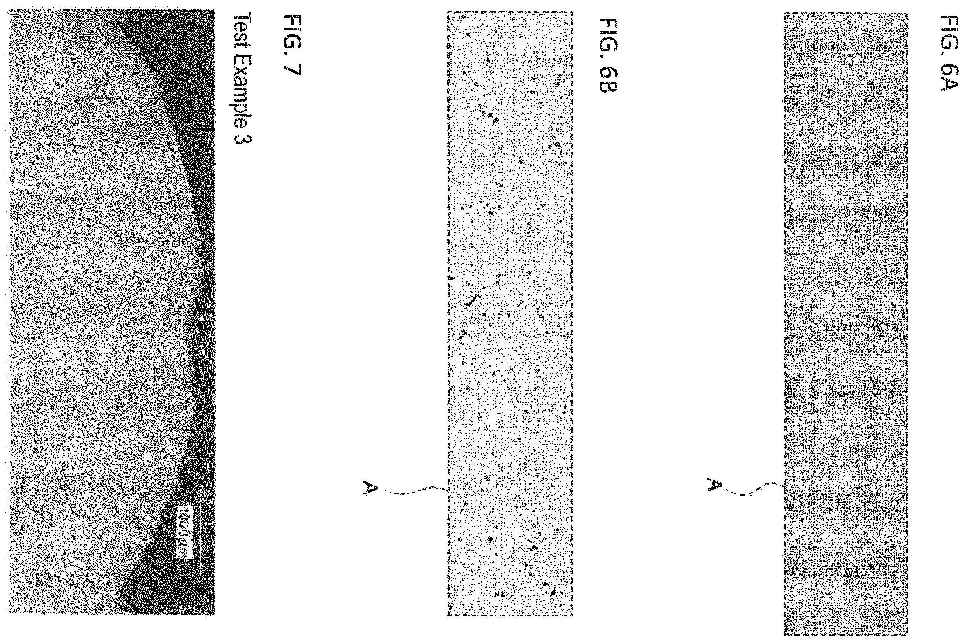

Specifically, as shown in FIG. 6A, a part of the inspection area A in a captured image obtained by capturing an image of the cross section of the hardened layer was cut out as an area ratio measurement image. Next, the area ratio measurement image cut out was converted into a binary image by setting a threshold value to distinguish between a matrix having high brightness and carbides having low brightness. Accordingly, as shown in FIG. 6B, a binary image, in which carbides indicated by black pixels were scattered in the matrix indicated by white pixels, was obtained. Then, a proportion of an area of black pixels to an area of the inspection area A was measured from the obtained binary image, and the proportion was defined as the area ratio b [area%] of remaining particles.

The calculation result of the area ratio b of the remaining particles based on the binary image in FIG. 6B was 0.971 [area%], and the ratio (b/a) of the area ratio b to the volume fraction a of the second powder was 0.119.

From this result, it was confirmed that a high-hardness hardened layer having a uniform hardness distribution was obtained in Test Example 2 in which the hardened layer was formed by using the mixture of Stellite #1 (first powder) and tungsten carbide (second powder), as compared with Test Example 1 in which the hardened layer was formed using only Stellite #1 (first powder). In addition, from the result of Test Example 2, it was confirmed that a high-hardness hardened layer having a uniform hardness distribution and having a thickness of several millimeters can be formed.

### (Test Examples 3 and 4)

In Test Example 3, a hardened layer was formed using only Colmonoy #5 (first powder) as shown in Table 1. In Test Example 4, a hardened layer was formed using a mixture of Colmonoy #5 (first powder) and tungsten carbide (second powder). The laser output was set to 3.5 kW in both Test Examples 3 and 4. In Test Example 4, a part of tungsten carbide as the second powder was allowed to be dissolved in a matrix formed of Colmonoy #5.

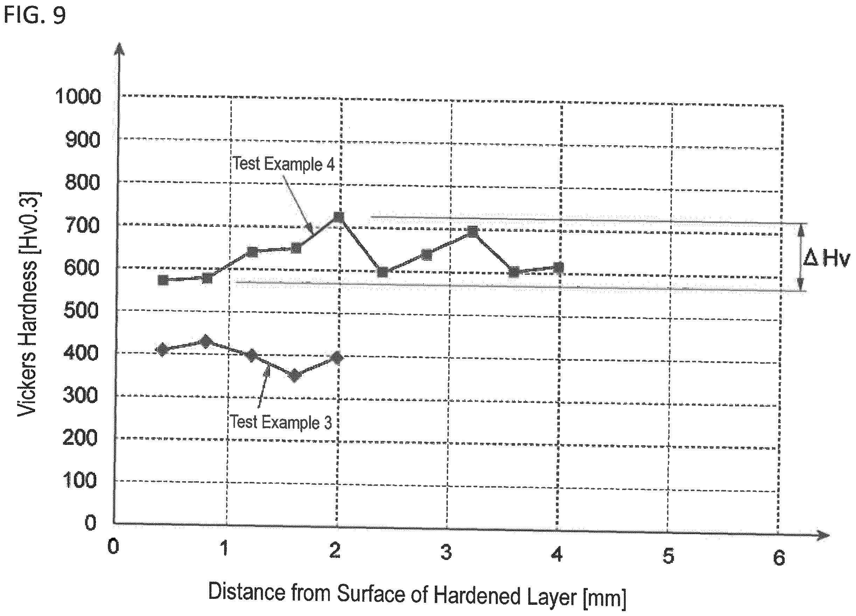

As shown in FIG. 9, the Vickers hardness in a range of a depth of 2 mm or less from a surface of the hardened layer in Test Example 3 was 440 Hv or less. The Vickers hardness in a range of a depth of 4 mm or less from a surface of the hardened layer in Test Example 4 was 580 Hv or more, and the variation ΔHv in hardness in the thickness direction of the hardened layer was 200 Hv or less.

As shown in Table 2, the blending amount of the second powder in the mixed powder in Test Example 4 was converted from the density and the supply rate of each powder in a similar manner as described above, and was 11.2 [wt.%] in terms of mass fraction and was 7.71 [vol%] in terms of volume fraction a.

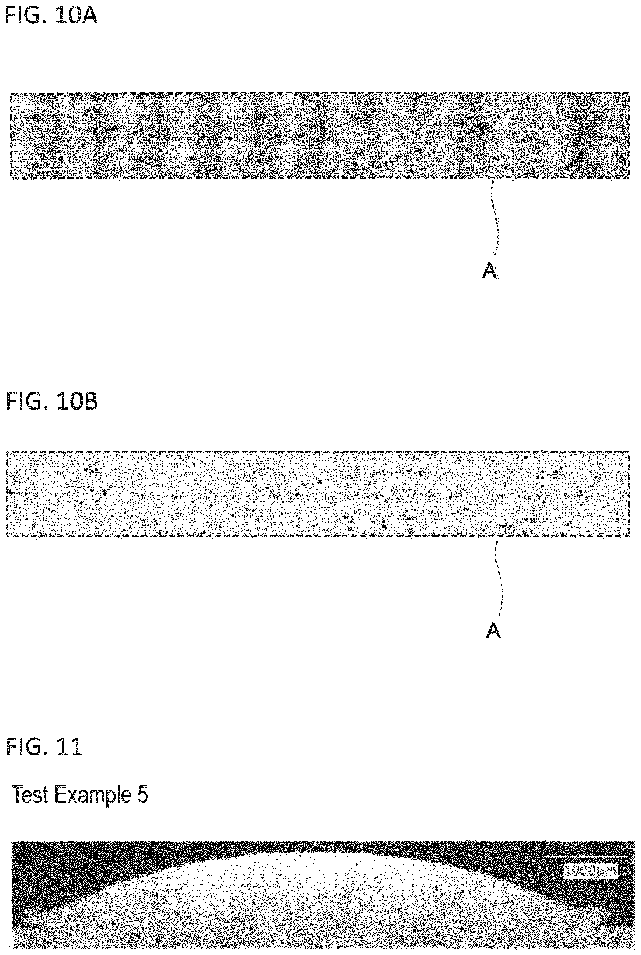

The calculation result of the area ratio b of remaining particles of the second powder based on a binary image in FIG. 10B, which was obtained by binarizing an inspection area A in a cross section of a hardened layer shown in FIG. 10A, was 1.14 [area%], and the ratio (b/a) of the area ratio b to the volume fraction a of the second powder was 0.148.

From this result, it was confirmed that a high-hardness hardened layer having a uniform hardness distribution was obtained in Test Example 4 in which the hardened layer was formed using the mixture of Colmonoy #5 (first powder) and tungsten carbide (second powder), as compared with Test Example 3 in which the hardened layer was formed using only Colmonoy #5 (first powder). In addition, from the result of Test Example 4, it was confirmed that a high-hardness hardened layer having a uniform hardness distribution and having a thickness of several millimeters can be formed.

### (Test Examples 5 and 6)

In Test Example 5, a hardened layer was formed using only Colmonoy #21 (first powder). In Test Example 6, a hardened layer was formed using a mixture of Colmonoy #21 (first powder) and tungsten carbide (second powder). Colmonoy #21 has a lower hardness than Stellite #1 or the like, so that a laser output was reduced to 2.5 kW in both Test Examples 5 and 6, and the tungsten carbide powder which has not been melted and has been in a state of particles was allowed to remain in a matrix of Colmonoy #21.

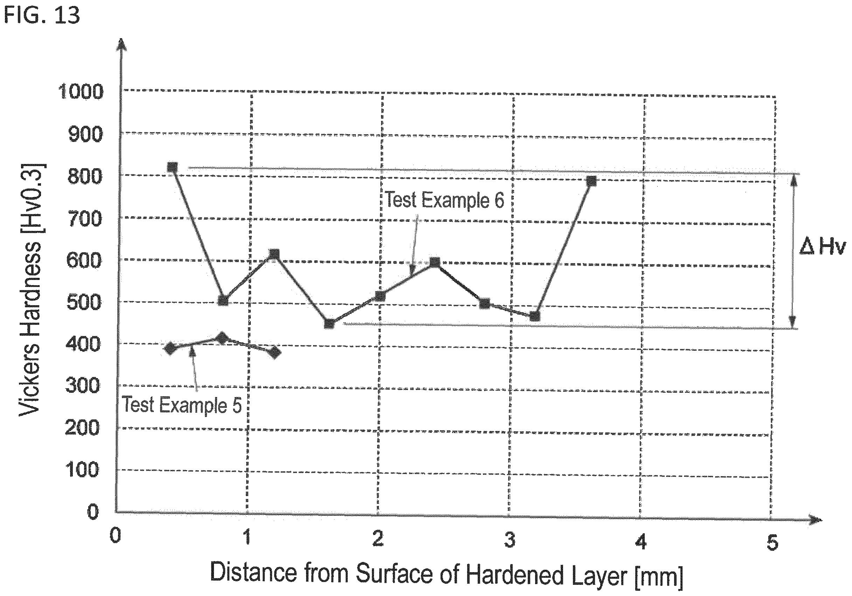

As shown in FIG. 13, the hardness in a range of a depth of 1.2 mm or less from a surface of the hardened layer in Test Example 5 was 420 Hv or less. The hardness in a range of a depth of 3.6 mm or less from a surface of the hardened layer in Test Example 6 was 480 Hv or more. The variation ΔHv in hardness in a thickness direction of the hardened layer increased to a magnitude exceeding 200 Hv.

As shown in Table 2, the blending amount of the second powder in the powder material, which was evaluated in the mass fraction, in the mixed powder in Test Example 6 was converted from the density and the supply rate of each powder in a similar manner as described above, and was 29.6 [wt.%] in terms of mass fraction and was 22.2 [vol%] in terms of volume fraction a.

The calculation result of the area ratio b of remaining particles of the second powder based on a binary image shown in FIG. 13B, which was obtained by binarizing an inspection area A in a cross section of a hardened layer shown in FIG. 10A, was 25.1 [area%], and the ratio (b/a) of the area ratio b to the volume fraction a of the second powder was 1.13. This is because the tungsten carbide powder does not melt and remains in the state of particles.

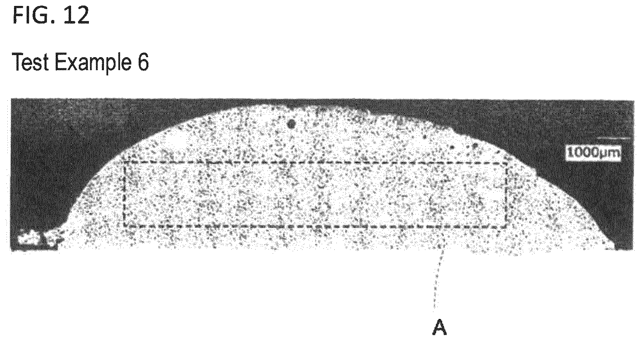

From this result, it can be found from the comparison between Test Example 4 and Test Example 6 that, even in a case of Test Example 6 in which the hardened layer was formed using the mixture of Colmonoy #21 (first powder) and tungsten carbide (second powder), if the ratio b/a exceeded 0.2 [area%], the hardness distribution varies and the desired high-hardness hardened layer cannot be stably obtained. It is considered that hardness distribution corresponding to the distribution of the second powder is generated because an area where almost no remaining particles of the second powder are present and an area where remaining particles are densely present are existed in a mixed manner, as shown in a cross section in FIG. 12, and the remaining particles are non-uniformly dispersed with a local bias.

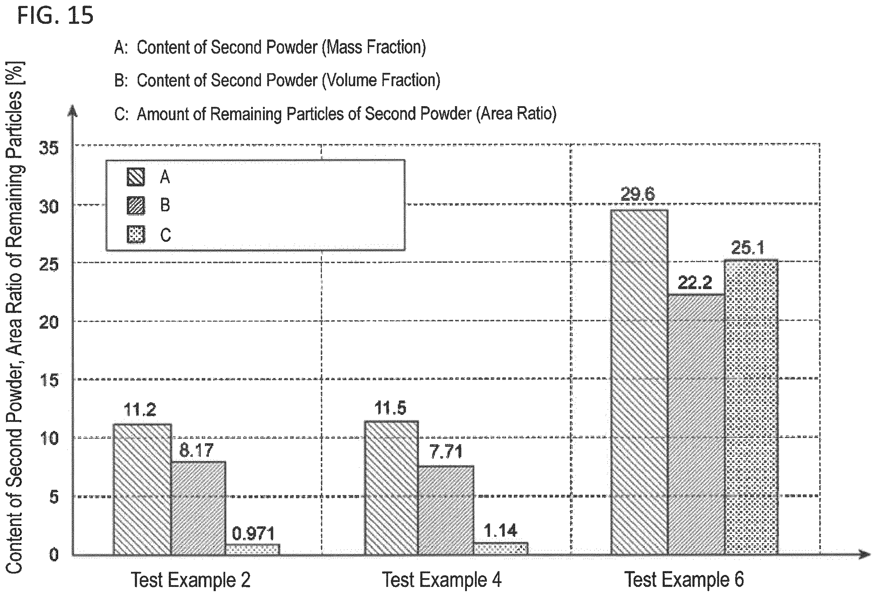

FIG. 15 is a graph showing a content of a second powder and an area ratio of remaining particles in each of Test Examples 2, 4, and 6. In Test Example 2 and Test Example 4, the ratio b/a is 0.119 and 0.148, respectively, both of which are 0.2 [area%] or less, and the amount of remaining particles relative to the blending amount of the second powder is small. In contrast, the ratio b/a is 25.1 [area%], and most of the particles remain in Test Example 6. The variation in Vickers hardness in Test Example 6 is considered to be due to the fact that such a large amount of remaining particles of the second powder further promoted a non-uniform hardness distribution.

The present invention is not limited to the above embodiments, and combinations of the respective configurations of the embodiments, or changes and applications made by those skilled in the art based on the description of the specification and the well-known technology are also intended by the present invention and are included within the scope to be protected.

As described above, the present description discloses the following subject matters.
(1) A method for depositing a hardened layer, comprising sequentially depositing a hardened layer formed by supplying a powder material for forming a hardened layer, which is obtained by mixing a plurality of kinds of powders, to a substrate, and melting and solidifying the powder material on/above the substrate,
   wherein the powder material contains a first powder containing an alloy to be serving as a matrix portion of the hardened layer and a second powder containing a ceramic,
   wherein the method comprises heating the powder material until at least a part of the second powder is melted, to allow at least a part of metal elements contained in the melted second powder to be dissolved in the matrix portion of the hardened layer.
   Thanks to this method for depositing a hardened layer, a part of the second powder is allowed to be dissolved in the alloy of the first powder to be serving as the matrix portion of the hardened layer, and the hardness at a part including the matrix portion can be improved, so that a hardened layer having a thickness of several millimeters can be stably formed without causing a crack.
(2) The method for depositing a hardened layer according to (1), wherein the first powder is a powder of a Stellite alloy or Colmonoy alloy, and the second powder is a tungsten carbide powder.
   Thanks to this method for depositing a hardened layer, a part of the tungsten carbide powder is allowed to be dissolved in the Stellite alloy or Colmonoy alloy to be serving as the matrix portion of the hardened layer, and the hardness at a part including the matrix portion can be improved.
(3) The method for depositing a hardened layer according to (1) or (2), wherein a ratio b/a is 0.2 or less,
   wherein a [vol%] represents a volume fraction of the second powder blended in the powder material to the powder material, and b [area%] represents an area ratio of remaining particles of the second powder in a cut surface of the hardened layer per unit area.
   Thanks to this method for depositing a hardened layer, a high-hardness hardened layer having a uniform hardness distribution can be formed more stably.
(4) The method for depositing a hardened layer according to any one of (1) to (3), wherein a variation in Vickers hardness in a range of a depth of up to 3 mm from a surface of the outermost layer of the hardened layer toward an inside of the hardened layer is 200 Hv or less.
   Thanks to this method for depositing a hardened layer, a high-hardness hardened layer excellent in wear resistance and the like can be stably formed.
(5) The method for depositing a hardened layer according to any one of (1) to (4), wherein the hardened layer is formed by laser metal deposition welding.
   Thanks to this method for depositing a hardened layer, a high-hardness hardened layer excellent in wear resistance and the like can be formed without complicating the process.
(6) A method for producing an additively-manufactured object, comprising:
   overlaying a target overlay member with the hardened layer by the method for depositing a hardened layer according to any one of (1) to (5),
   wherein the substrate is the target overlay member.

Thanks to this method for producing an additively-manufactured object, it is possible to overlay with a hardened layer having a thickness of several millimeters without causing a crack, and a high-quality additively-manufactured object can be produced.

This application is based on Japanese Patent Application No. 2018-196019 filed on October 17, 2018, the contents of which are incorporated herein by reference.

### REFERENCE SIGNS LIST

- 23: Substrate (target overlay member)
- 35: Powder material
- 41: Hardened layer
- 100: Laser metal deposition device

## Claims

1. A method for depositing a hardened layer, comprising sequentially depositing a hardened layer formed by supplying a powder material for forming a hardened layer, which is obtained by mixing a plurality of kinds of powders, to a substrate, and melting and solidifying the powder material on/above the substrate,
wherein the powder material contains a first powder containing an alloy to be serving as a matrix portion of the hardened layer and a second powder containing a ceramic,
wherein the method comprises heating the powder material until at least a part of the second powder is melted, to allow at least a part of metal elements contained in the melted second powder to be dissolved in the matrix portion of the hardened layer.

2. The method for depositing a hardened layer according to claim 1, wherein the first powder is a powder of a Stellite alloy or Colmonoy alloy, and the second powder is a tungsten carbide powder.

3. The method for depositing a hardened layer according to claim 1, wherein a ratio b/a is 0.2 or less,
wherein a [vol%] represents a volume fraction of the second powder blended in the powder material to the powder material, and b [area%] represents an area ratio of remaining particles of the second powder in a cut surface of the hardened layer per unit area.

4. The method for depositing a hardened layer according to claim 2, wherein a ratio b/a is 0.2 or less,
wherein a [vol%] represents a volume fraction of the second powder blended in the powder material to the powder material, and b [area%] represents an area ratio of remaining particles of the second powder in a cut surface of the hardened layer per unit area.

5. The method for depositing a hardened layer according to any one of claims 1 to 4, wherein a variation in Vickers hardness in a range of a depth of up to 3 mm from a surface of the outermost layer of the hardened layer toward an inside of the hardened layer is 200 Hv or less.

6. The method for depositing a hardened layer according to any one of claims 1 to 4, wherein the hardened layer is formed by laser metal deposition welding.

7. The method for depositing a hardened layer according to claim 5, wherein the hardened layer is formed by laser metal deposition welding.

8. A method for producing an additively-manufactured object, comprising:
overlaying a target overlay member with the hardened layer by the method for depositing a hardened layer according to any one of claims 1 to 4,
wherein the substrate is the target overlay member.

9. A method for producing an additively-manufactured object, comprising:
overlaying a target overlay member with the hardened layer by the method for depositing a hardened layer according to claim 5,
wherein the substrate is the target overlay member.

10. A method for producing an additively-manufactured object, comprising:
overlaying a target overlay member with the hardened layer by the method for depositing a hardened layer according to claim 6,
wherein the substrate is the target overlay member.

11. A method for producing an additively-manufactured object, comprising:
overlaying a target overlay member with the hardened layer by the method for depositing a hardened layer according to claim 7,
wherein the substrate is the target overlay member.
